# EUROPEAN PATENT APPLICATION

(11) **EP 4 620 293 A1**
(43) Date of publication of application: **24.09.2025**
(21) Application number: 23903803.7
(22) Date of filing: 22.11.2023
(51) Int. Cl.: A01G 7/04, A01G 31/02, F21V 21/008, F21V 21/36

(54) **PLANT CULTIVATION APPARATUS**

(30) Priority: 12.12.2022 KR 20220172256
(71) Applicant: LG Electronics Inc., Yeongdeungpo-gu Seoul 07336 (KR)
(72) Inventor: LEE, Taeyun, Seoul 08592 (KR); CHOI, Jungeun, Seoul 08592 (KR); RYU, Inhwan, Seoul 08592 (KR)
(74) Representative: Ter Meer Steinmeister & Partner
(86) International application number: PCT/KR2023/018838
(87) International publication number: WO 2024/128600

(57) **Abstract**

A plant cultivation apparatus according to an embodiment of the present invention comprises: a body forming a cultivation space in which plants are grown; a lighting device provided in the cultivation space to illuminate the cultivation space; and a lift assembly connected to the lighting device and moving the lighting device, wherein the cultivation space includes a first region in which plants are located and a second region above the first region; and the lighting device is moved up and down within the second region by operations of the lift assembly.

## Description

### TECHNICAL FIELD

The present invention relates to a plant cultivation apparatus.

### BACKGROUND ART

A typical plant cultivation apparatus forms a predetermined cultivation room that provides an environment suitable for the growth of plants, and stores plants inside the predetermined cultivation room. The plant cultivation apparatus is provided with a configuration to supply water, nutrients and light, which are necessary for plant growth, and the plants are grown by the supplied water, nutrients and light.

A plant cultivation apparatus using conventional technologies is disclosed in Korean Patent No. 10-1240375. In this conventional technologies, multi-staged trays are disposed inside a cabinet, and light may be irradiated from a light irradiation part to the trays to irradiate light to plants.

However, in such the conventional technologies, a position of the light irradiation part is fixed, and it may not effectively respond to a height difference depending on the type of plants, and even if a change in height occurs due to the growth of the plants, light irradiation may be possible only at the fixed position, and thus, there is a problem that the efficiency of the plant cultivation is deteriorated.

### DISCLOSURE OF THE INVENTION

### TECHNICAL PROBLEM

An object of an embodiment of the present invention is to provide a plant cultivation apparatus that is capable of adjusting a lighting device to an appropriate height in response to growth of a plant.

An object of an embodiment of the present invention is to provide a plant cultivation apparatus capable of stable vertical movement of a lighting device.

An object of an embodiment of the present invention is to provide a plant cultivation apparatus having an improved outer appearance and light irradiation efficiency.

### TECHNICAL SOLUTION

A plant cultivation apparatus according to an embodiment of the present invention includes: a body having a cultivation space, in which plants are grown; a lighting device provided in the cultivation space to illuminate the cultivation space; and a lift assembly connected to the lighting device to move the lighting device, wherein the cultivation space includes a first region in which a plant is disposed and a second region above the first region, and the lighting device is elevated within the second region by an operation of the lift assembly.

The first region may vary depending of growth of the plant, and the second region may be inversely proportional to the variation of the first region.

The body may include: a lower body on which the plant is disposed; and an upper body disposed to be spaced upward from the lower body and provided with the lift assembly, wherein the cultivation space may be defined between the lower body and the upper body.

The lift assembly may include a wire connected to the lighting device provided below the upper body, and a withdrawal length of the wire may be adjusted according to an operation of the lift assembly to determine a height of the lighting device.

The wire may be provided in plurality, and at least one or more wires may be provided as electric wires through which power is supplied to the lighting device.

The lift assembly may include: a driving part configured to provide rotation power; a pinion rotating by the driving part; and a movable member which extends in an extension direction of the upper body and on which a rack gear coupled to the pinion is disposed, wherein the wire may be connected to an end of the movable member and is adjusted in length, by which the wire is withdrawn from the upper body, according to reciprocating movement of the movable member.

The driving part may be a motor and move forwardly and reversely according to a user's operation input.

An input part configured to input a user's manipulation for the operation of the driving part may be disposed on a top surface of the upper body.

The plant cultivation apparatus according may further include a display part configured to display an operation of the plant cultivation apparatus on a top surface of the upper body.

A guide module configured to guide the movement of the movable member may be disposed on the upper body, wherein the guide module may include: a rail extending the moving direction of the movable member; and a slider coupled to the movable member and the rail and slid along the rail.

The wire may be disposed in pair side by side, and the upper body may be provided with: a roller having a wire groove, in which the pair of wires are accommodated, and rotatably mounted on the upper body; and a coupling member connected to ends of the pair of wires and coupled to the movable member.

The driving part, the pinion, and the movable member may be disposed in pair at both left and right sides with respect to a center of the upper body, and the wire may be connected to each of the movable members disposed at both the sides.

The lift assembly may include: a pinion rotatably mounted on the upper body; a movable member which extends in an extension direction of the upper body and on which a rack gear coupled to the pinion is disposed; and a manipulation member protruding from one side of the movable member and exposed to the outside of the upper body to manipulate the movable member so that the movable member moves, wherein the wire may be connected to an end of the movable member and is adjusted in length, by which the wire is withdrawn from the upper body, according to reciprocating movement of the movable member.

The lift assembly may include: a rotation plate rotatably mounted on the upper body and provided with a pinion gear at a central portion thereof; a movable member extending in an extension direction of the upper body and provided with a rack gear coupled to the pinion gear to reciprocally move; a manipulation member protruding from one side of the movable member and exposed to the outside of the upper body to manipulate the movable member so that the movable member moves; and a link that is axially coupled to the manipulation member and the rotation plate and configured to rotate the rotation plate according to the manipulation of the manipulation member, wherein the wire may be connected to an end of the movable member and is adjusted in length, by which the wire is withdrawn from the upper body, according to the reciprocating movement of the movable member.

A manipulation member guide extending in the moving direction of the movable member may be disposed on the upper body, wherein a guide groove recessed so that the manipulation member is inserted to guide the reciprocation movement of the manipulation member may be defined in the manipulation member guide.

The lighting device may include: a light source; a light case configured to accommodate the light source and define an outer appearance of an upper portion of the lighting device; and a cover which is configured to shield an opened bottom surface of the light case and through which light of the light source is transmitted, wherein an end of the wire may be connected to a top surface of the light case.

The upper body may include: a body top configured to define a top surface of the upper body; and a body base which is coupled to the body top to define a space in which the lift assembly is accommodated and through which the wire enters, wherein the top surface of the light case may have a size corresponding to that of a bottom surface of the body base, and the light case and the body base may be in contact with each other when the lighting device is disposed at the highest position.

A bottom surface of the lighting device may be disposed parallel to a bottom surface of the upper body and a top surface of the lower body.

The plant cultivation apparatus may further include a frame configured to connect the upper body to the lower body, wherein a power cable configured to supply power to the plant cultivation apparatus may be guided from the lower body to the upper body through the frame.

A cover configured to shield at least a portion of the cultivation space and enable viewing of the inside may be disposed between the upper body and the lower body.

### ADVANTAGEOUS EFFECTS

The plant cultivation apparatus according to the proposed embodiment may be expected to have the following effects.

The plant cultivation apparatus according to the embodiment of the present invention may include the lighting device that irradiates the light onto the plant between the upper body and the lower body, and the lighting device may adjust the height by the lift assembly.

Thus, there may be the advantage in that the height of the lighting device is appropriately adjusted according to the growth rate of the plant to enable the effective light supply to the plant. There may be the advantage in that the position of the lighting device is adjusted so that the optimal amount of light is supplied even when the height of the plant is changed from the beginning of the plant cultivation to the harvest time.

In addition, there may be the advantage in that the more efficient plant cultivation is possible by adjusting the height of the lighting device according to the height of various types of plants grown in the plant cultivation apparatus.

In addition, the lighting device may have the height adjusted vertically by the lift assembly, and simultaneously, both the sides of the lighting device may be connected to the lift assembly by the wires, and thus, the lighting device may have the advantage of ensuring the stable elevation without being inclined.

In addition, the wire connecting the lift assembly to the lighting device may have the function of the electric wire supplying the power to the lighting device, and thus, there may be the advantage in that the power is supplied, and the elevation of the lighting device is performed through the wire.

In addition, the lift assembly may be intuitively manipulated by the manipulation of the manipulation part or the manipulation member by the user, and may have the advantage of the easy manipulation for adjusting the height of the lighting device.

In addition, all the lift assembly and the manipulation part or the manipulation member may be provided in the upper body to provide the advantage of improving the assembling efficiency.

In addition, the lift assembly may be provided inside the upper body to simplify the configuration of the lighting device to be elevated, and thus, the overall outer appearance may be simple to provide the advantage of improving the outer appearance.

In addition, the lighting device may be configured to have the size and shape corresponding to those of the upper body, and thus, the overall outer appearance may have the sense of unity, and the outer appearance may not be deteriorated even when the lighting device is disposed.

In addition, the power cable for supplying the power to the lift device and the lighting device may be disposed to pass through the frame connecting the upper body to the lower body, thereby preventing the power cable from being exposed and improving the outer appearance.

In addition, there may be the advantage in that the front cover, the rear cover, and the side cover that enable the internal visibility are provided between the upper body and the lower body, and thus, the plant cultivation status is easily checked, and the movement status of the lighting device is easily checked to improve the convenience of use.

### BRIEF DESCRIPTION OF THE DRAWINGS

FIG. 1 is a perspective view of a plant cultivation apparatus of an embodiment of the invention.
FIG. 2 is a perspective view of an upper body and a lighting device, which are components of the plant cultivation apparatus.
FIG. 3 is an exploded perspective view of the upper body.
FIG. 4 is an enlarged view of a portion A of FIG. 3.
FIG. 5 is a perspective view of a lift assembly that is one component of the upper body when viewed from below.
FIG. 6 is an enlarged view of a portion B of FIG. 3.
FIG. 7 is an exploded perspective view of the lighting device.
FIG. 8 is a view illustrating a state of the lift assembly when the lighting device is disposed at the highest height.
FIG. 9 is a side view illustrating a state of the plant cultivation apparatus in the state of FIG. 8.
FIG. 10 is a view illustrating a state of the lift assembly when the lighting device is disposed at the lowest height.
FIG. 11 is a side view illustrating a state of the plant cultivation apparatus in the state of FIG. 10.
FIG. 12 is a perspective view of an upper body and a lighting device, which are components of a plant cultivation apparatus, of another embodiment of the invention.
FIG. 13 is a view illustrating a state of a lift assembly when the lighting device is disposed at the highest height.
FIG. 14 is a view illustrating a state of the lift assembly when the lighting device is disposed at the lowest height.
FIG. 15 is a partial perspective view illustrating an operation state of the lift assembly.
FIG. 16 is a view illustrating a state of a lift assembly in a state in which a lighting device of a plant cultivation apparatus is disposed at the highest height of further another embodiment of the invention.
FIG. 17 is a view illustrating a state of the lift assembly when the lighting device is disposed at the lowest height.
FIG. 18 is a partial perspective view illustrating an operation state of the lift assembly.

### MODE FOR CARRYING OUT THE INVENTION

Hereinafter, detailed embodiments will be described in detail with reference to the accompanying drawings. However, the scope of the present disclosure is not limited to proposed embodiments of the present invention, and other regressive inventions or other embodiments included in the scope of the present disclosure may be easily proposed through addition, change, deletion, and the like of other elements.

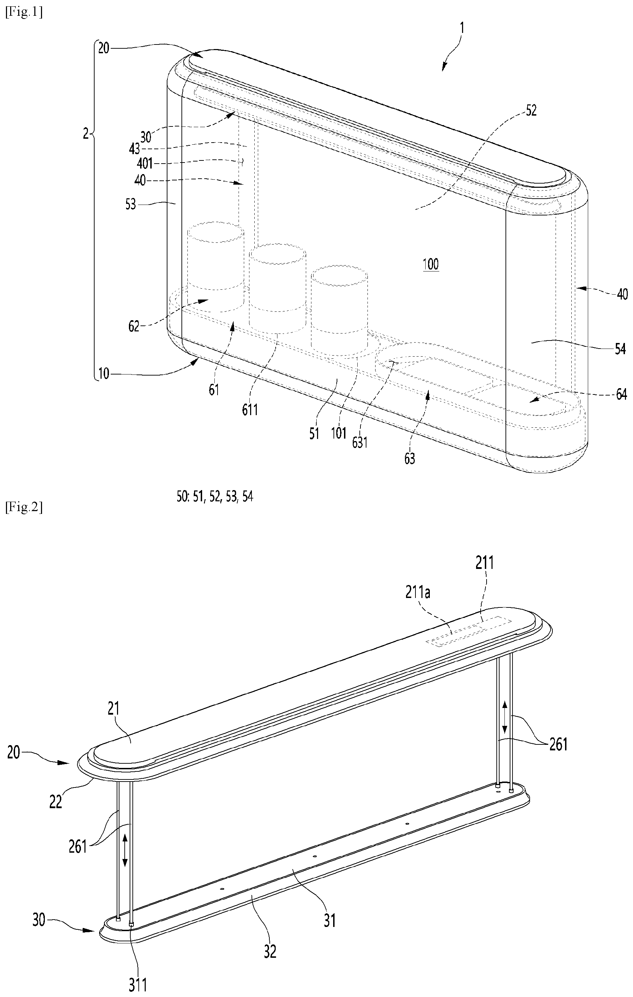

Before explaining, directions will be defined. In the following descriptions, a direction in which a front cover of a plant cultivation apparatus illustrated in FIG. 2 is disposed may be defined as a forward direction, a direction in which a rear cover is disposed may be defined as a backward direction, a direction in which an upper body is disposed may be defined as a downward direction, a direction in which a lower body is disposed may be defined as a downward direction, and a direction in which a side cover is disposed may be defined as a left and right direction. Alternatively, if necessary, the directions may be redefined and explained, but unless otherwise description, it will be explained according to the definition of the direction as described above.

FIG. 1 is a perspective view of a plant cultivation apparatus according to an embodiment of the present invention. In addition, FIG. 2 is a perspective view of an upper body and a lighting device, which are components of the plant cultivation apparatus.

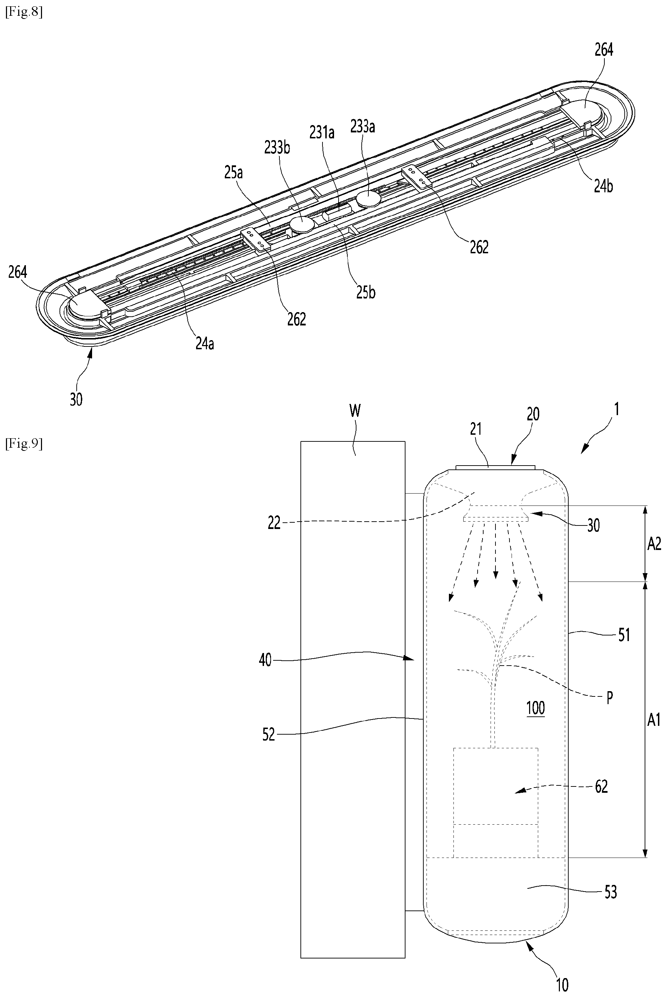

As illustrated in the drawings, a plant cultivation apparatus 1 according to an embodiment of the present invention may include a body 2 defining a cultivation space 100 in which a plant (see reference symbol P in FIG. 9) is cultivated. The body 100 may include a lower body 10 and an upper body 20. The cultivation space 100 may be defined by a space between the lower body 10 and the upper body 20. That is, the plant P being cultivated may be grown within the cultivation space 100 between the lower body 10 and the upper body 20.

The cultivation space 100 may include a first region (see reference symbol A1 in FIG. 9) in which the plant P is grown, and a second region (see reference symbol A2 in FIG. 9) defined above the first region A1. The plant P may be grown in the first region A1, and a height of the first region A1 may vary depending on the growth of the plant P. The first region A1 may be called a growth region or a variable region. In addition, a lighting device 30 that illuminates the cultivation space 100 may be elevated in the second region A2. The second region A2 may be called an elevation region. The second region A2 may be defined to be inversely proportional to a height change of the first region A1.

The lower body 10 may extend lengthily in a left and right direction, and each of left and right ends of the lower body 10 may be rounded. The lower body 10 may define a bottom surface of the plant cultivation apparatus 1, and the plant P may be disposed thereon. In detail, a tray accommodation part 101 recessed downwards may be defined in a top surface of the lower body 10. The tray accommodation part 101 may be provided in plurality.

In addition, the tray accommodation part 101 may be provided with trays 61 and 63 for the cultivating the plant P. The trays 61 and 63 may be configured in different types depending on the types of the plant P being grown, and may be configured in a shape that is mounted in the tray accommodation part 101. For example, the trays 61 and 63 may include a pad tray 63 on which a pad 64 including seeds and media is seated, and a container tray 61 on which a container 62 for hydroponic cultivation is seated.

The pad tray 63 may be provided to a size corresponding to that of the tray accommodation part 101 and may define a pad accommodation part 631 with a top surface opened. **In** addition, the pad 64 may be disposed inside the pad accommodation part 631, and water provided to the pad 64 may be filled.

The container tray 61 may be provided in a shape corresponding to that of the tray accommodation part 101, and a top surface of the container tray 61 may have a height corresponding to the opened top surface of the tray accommodation part 101. **In** addition, a container opening 611 into which the container 62 is inserted may be defined in the container tray 61. The container opening 611 may have a size corresponding to a cross-sectional area of the container 62 and may be provided in plurality. Thus, the user may insert and mount the container 62 into the container opening 611. When the container 62 is mounted, a height of the container 62 may be higher than a height of the pad tray 63.

The user may selectively mount the pad tray 63 or the container tray 61 in the tray accommodation part 101 depending on the type or shape of the plant.

The upper body 20 may be provided above the lower body 10 and may define a top surface of the plant cultivation apparatus 1. In addition, a size of the bottom surface of the upper body 20 may be provided to correspond to a size of the top surface of the lower body 10.

The upper body 20 may be provided with a lift assembly 200 to be described below. In addition, a lighting device 30 for irradiating light onto the plant P may be provided below the upper body 20.

The lighting device 30 may be connected to the upper body 20 by a wire 261. The wire 261 may be inserted into and withdrawn from the upper body 20. Thus, the lighting device 30 may move vertically according to the withdrawal and insertion of the wire 261, and thus, a height within the plant cultivation apparatus 1 may be adjusted. For example, the lighting device 30 may be in contact with a bottom surface of the upper body 20 at the highest position. In addition, the lighting device 30 may be disposed on an upper end of the container 62 or an upper end of the plant P being grown at the lowest position. That is, the lighting device 30 may move vertically in the second region A2 of the cultivation space 100.

In addition, a top surface of the lighting device 30 may have the same size and shape as the bottom surface of the upper body 20. Thus, in the state in which the lighting device 30 is mounted to be in contact with the upper body 20, the lighting device 30 may have a sense of unity with the upper body 20.

In addition, the wire 261 may be connected to each of left and right sides of the top surface of the lighting device 30. In addition, the wire 261 may be provided in pair that are spaced apart from each other at the left and right sides of the lighting device 30 so that the lighting device 30 move vertically in a stable manner without being inclined.

The wire 261 may be simply connected to the lighting device 30 to supply power to the lighting device 30 in addition to the elevation of the lighting device 30. That is, the wire 261 may be provided as at least a portion of an electric wire and may supply power to the lighting device 30.

In addition, the lighting device 30 may be disposed parallel to the bottom surface of the upper body 20 and the top surface of the lower body 10. Thus, even in the process of elevating the lighting device 30, the lighting device 30 may be maintained in a state parallel to the top surface of the lower body 10 and may irradiate uniform light to the plant P disposed on the lower body 10.

Specific structures of the upper body 20 and lighting device 30 will be described in more detail below.

The plant cultivation apparatus 1 may further include a frame 40. The frame 40 may be provided between the upper body 20 and the lower body 10. The frame 40 may connect the upper body 20 to the lower body 10. The frame 40 may be disposed in pair at left and right sides. In addition, the frame 40 may connect a rear end of the top surface of the lower body 10 and a rear end of the bottom surface of the upper body 20. In addition, the frame 40 may be disposed on each of left and right ends of the rear surfaces of the lower body 10 and the upper body 20. In addition, the frame 40 may be fixed to a wall W, and the plant cultivation apparatus 1 may be mounted in a shape of being hung on the wall W.

The frame 40 may have a hollow 401 therein. Thus, the inside of the lower body 10 and the inside of the upper body 20 may communicate with each other through the frame 40. In addition, a power cable 43 may be disposed on at least one side of the frame 40 disposed at each of the left and right sides. That is, the power cable 43 may be guided from the lower body 10 to the upper body 20 through the frame 40. In addition, the power cable 43 may be connected to an electric component provided inside the upper body 20 to supply power. For example, the power cable 43 may be connected to the lighting device 30. In addition, the power cable 43 may be connected to the lift assembly 200. In addition, the power cable 43 may be connected to the manipulation part 211.

The plant cultivation apparatus 1 may include a cover 50. The cover 50 may shield an exposed space of each of the lower body 10 and the upper body 20 and provide a growing space for the plant P.

The cover 50 may include a front cover 51 defined a front surface of the plant cultivation apparatus 1, a rear cover 52 defined a rear surface of the plant cultivation apparatus 1, and side covers 53 and 54 defined left and right surfaces of the plant cultivation apparatus 1.

The front cover 51 may be disposed along a front surface of each of the lower body 10 and the upper body 20. In addition, the front cover 51 may be fixed by connecting the front surface of the lower body 10 to the front surface of the upper body 20.

The rear cover 52 may be disposed along a rear surface of each of the lower body 10 and the upper body 20. In addition, the rear cover 52 may be fixed by connecting the rear surface of the lower body 10 to the rear surface of the upper body 20.

The side covers 53 and 54 may be disposed along both sides of each of the lower body 10 and the upper body 20. Both the sides of the lower body 10 and upper body 20 may be round, and thus, the side covers 53 and 54 may also be rounded in a corresponding curved shape. The side covers 53 and 54 may connect a side surface of the lower body 10 to a side surface of the upper body 20.

The front cover 51, the rear cover 52, and the side covers 53 and 54 may be made of a transparent material that allows internal visibility. For example, the cover 50 may be made of a transparent plastic, acrylic or glass material.

In addition, at least a portion of the cover 50 may be provided to be detachable to input or withdraw the plant P grown inside the plant cultivation apparatus 1 or the trays 61 and 63 into/from the cover 50. For example, the side covers 53 and 54 may be provided to be detachable. When the side covers 53 and 54 are detached, access to the plants P disposed on the lower body 10 may be possible, and the pad tray 63 or the container tray 61 may be detached, or water may be additionally supplied to the container 62 or the pad 64.

Hereinafter, the structures of the upper body 20 and the lift assembly 200 will be described in more detail with reference to the drawings.

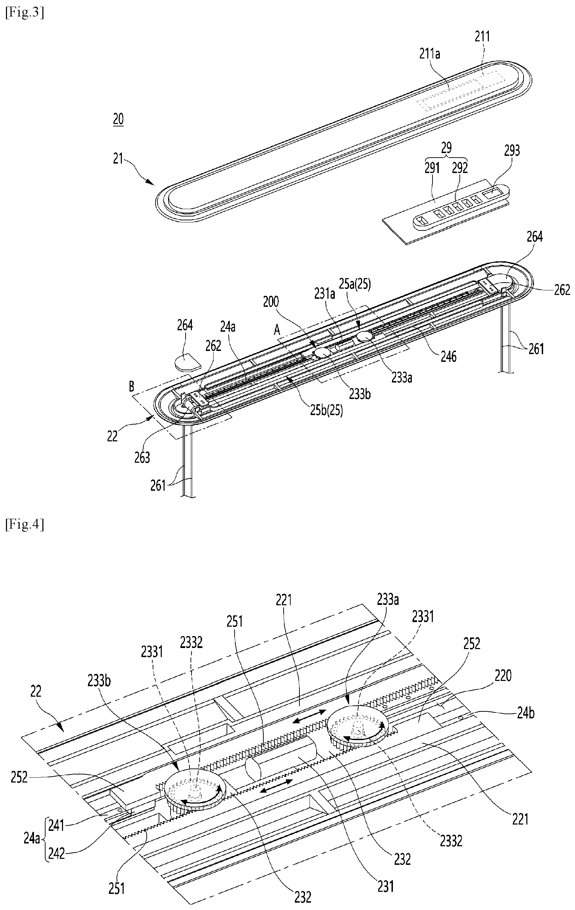

FIG. 3 is an exploded perspective view of the upper body. Also, FIG. 4 is an enlarged view of a portion A of FIG. 3.

As illustrated in the drawings, the upper body 20 may have a size corresponding to that of the lower body 10 and may be disposed vertically above the lower body 10. In addition, the upper body 20 may extend lengthily in the left and right direction, and left and right ends of the upper body 20 may be rounded.

The upper body 20 may include a body top 21 defining an upper portion of the upper body 20, and a body base 22 coupled to the body top 21 to define a lower portion of the upper body 20.

The body top 21 may define a top surface of the plant cultivation apparatus 1. The body top 21 may be exposed upward even when the front cover 51, the rear cover 52, and the side covers 53 and 54 are mounted to define an outer appearance of the top surface of the plant cultivation apparatus 1.

In addition, a manipulation part 211 into which user's manipulation is input may be disposed on the upper body 20. For example, the manipulation part 211 may be provided inside the upper body 20 so that the manipulation is input in a touch manner, and the manipulation may be input through a touch operation of the body top 21. Alternatively, the manipulation part 211 may be exposed on the body top 21 in a button or switch manner. In addition, the manipulation part 211 may include a display part 211a that displays an operation of the plant cultivation apparatus 1.

A display device 29 may be provided inside the upper body 20 corresponding to the manipulation part 211. The display device 29 may include a substrate 291 and a display module 292. In addition, the display module 292 may be provided with a touch device 293 that detects the manipulation of the manipulation part 211.

The body base 22 may be opened upward, and the opened top surface of the body base 22 may be shielded by being coupled to the body top 21. In addition, the inside of the body base 22 may be recessed downward to define a base accommodation part 220 in which the lift assembly 200 is disposed.

In detail, a base rib 221 extending upward may be provided on the body base 22. The base rib 221 may extend along the body base 22 and may be disposed along a central portion of the body base 22. The base rib 221 may be constituted by a pair of ribs extending in a straight line and spaced apart from each other, and both ends of the pair of ribs may be rounded.

The base rib 221 may define a base accommodation part 220 in which the lift assembly 200 is accommodated. That is, the lift assembly 200 may be disposed inside a space defined by the base rib 221. Here, the movable member 25 that moves in the left and right direction may be guided so as not to be separated by the base rib 221.

In addition, the base accommodation part 220 may be provided with a coupling member 262 that connects the wire 261 to the movable member 25. In addition, the base accommodation part 220 may be provided with a roller 263 that guides bending and insertion/withdrawal of the wire 261. In addition, the base accommodation part 220 may be provided with a guide module 24 that guides the movable member 25. The roller 263 and the coupling member 262 may be provided on both left and right ends of the base accommodation part 220, respectively. In addition, the lift assembly 200 and the guide module 24 may be disposed between the roller 263 and the coupling member 262.

When the body top 21 is coupled, a top surface of the base accommodation part 220 may be shielded by the body top 21, and the lift assembly 200 may be restricted from being detached.

A bottom surface of the body base 22 may be provided in a plane shape parallel to the top surface of the lighting device 30. In addition, the bottom surface of the body base 22 and the top surface of the lighting device 30 may have the same size. In addition, when the lighting device 30 is disposed at the highest height, the bottom surface of the body base 22 may be in contact with the top surface of the lighting device 30.

Hereinafter, the lift assembly 200 will be described in more detail with reference to the drawings.

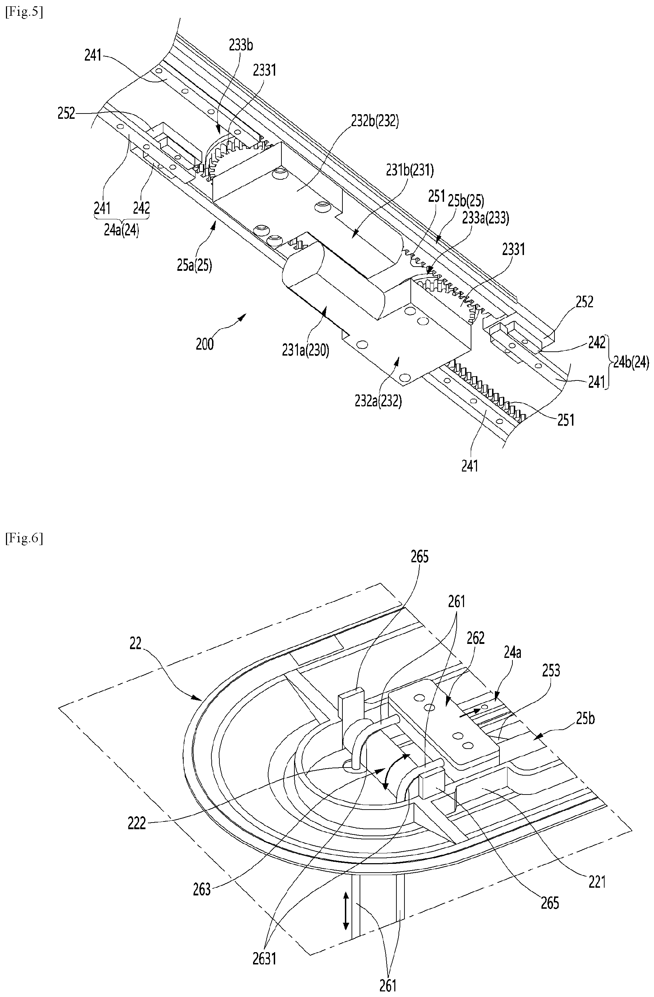

FIG. 5 is a perspective view of the lift assembly that is one component of the upper body when viewed from below. In addition, FIG. 6 is an enlarged view of a portion B of FIG. 3.

As illustrated in the drawings, the lift assembly 200 may include a driving part 231 that provides rotation power, a pinion 233 that rotates by the driving part 231, and a movable member 25 that is gear-coupled with the pinion 233 to reciprocate.

In detail, the driving part 231 may be provided as a motor that rotates in a forward and reverse direction. The driving part 231 may be driven according to the user's input to the manipulation part 211. The driving part 231 may be constituted by a first driving part 231a and a second driving part, which are connected to a pair of first pinions 233a and second pinions 233b, respectively. In addition, the first driving part 231 and the second driving part 231b may operate in synchronize with each other so that the wires 261 at both sides have the same length. Thus, the lighting device 30 may be elevated stably without being inclined.

The lift assembly 200 may include a driving part 231, a pinion 233, and a movable member 25, which are disposed at each of the left and right sides, and may be disposed at positions symmetrical on both sides with respect to the center of the upper body 20. In addition, the driving parts 231, the pinions 233, and the movable members 25, which are disposed at both the sides, may have the same structure. That is, the pinion 233 may be constituted by a first pinion 233a and a second pinion 233b, and the movable member 25 may be constituted by a first movable member 25a and a second movable member 25b.

Thus, the driving part 231, the pinion 233, and the movable member 25 will be described with respect to the structure at one side of both the sides.

A gear module 232 may be connected to a rotation shaft of the driving part 231. The gear module 232 may also be constituted by a first gear module 232a and a second gear module 232b. The gear module 232 may transmit the rotation force between a rotation shaft of the driving part 231 and a rotation shaft 2332 of the pinion 233. Thus, when the driving part 231 operates, the rotation shaft 2332 of the pinion 233 disposed in a direction intersecting the rotation shaft of the driving part 231 by the gear module 232 may rotate. Here, the rotation shaft 2332 of the pinion 233 may be gear-coupled to the gear module 232 to transmit the rotation power.

In addition, a pinion gear 2331 may be disposed around the pinion 233. The pinion gear 2331 may be disposed on a lower circumference and may be provided to be stepped from a top surface of the pinion 233. In addition, the pinion gear 2331 may be gear-coupled to a rack gear 251 of the movable member 25. In addition, a top surface of the pinion 233 may protrude further outward than the circumference of the pinion gear 2331 and may restrict the upward movement of the movable member 25 to prevent the coupling between the movable member 25 and the pinion 233 from being released.

The movable member 25 may extend along a longitudinal direction of the upper body 20 and may reciprocate within the base accommodation part 220. In detail, the rack gear 251 may be disposed on one side of the movable member 25, and the rack gear 251 may be connected to the pinion gear 2331. Here, the movable member 25 may be disposed to pass through the pinions 233 at each of both sides, and thus, the rack gear 251 disposed on the pinions 233 at each of both sides may be coupled to the pinion gear 2331. In addition, the pair of movable members 25 may be disposed in a direction facing each other with the pinion 233 as the center and all the pair of movable members 25 may be gear-coupled to the pinion 233. Thus, when the pair of driving parts 231 operate, the pair of movable members 25 may operate simultaneously and move the same distance in opposite directions. That is, the pair of movable members 25 may ensure that both the left and right sides of the lighting device 30 are elevated without being inclined.

A slider mounting part 252 may be disposed on one end of the movable member 25, and a slider 242 may be provided on a bottom surface of the slider mounting part 252. The slider 242 may be provided in plurality at regular intervals along the movable member 25.

In addition, a coupling member mounting part 253 may be disposed on the other end of the movable member 25. The coupling member mounting part 253 may be provided with a coupling member 262 connected to the wire 261. Thus, as the movable member 25 moves, the wire 261 may move together, and a length of the wire 261 exposed to the outside of the upper body 20 may be adjusted.

A guide module 24 may be provided below the movable member 25. The guide module 24 may be provided inside the base accommodation part 220.

The guide module 24 may include a rail 241 mounted inside the base accommodation part 220 and a slider 242 mounted on the rail 241. The guide module 24 may be provided as, for example, an LM guide (linear motion guide).

The rail 241 may extend along a moving path of the movable member 25 and may be cut in at least partial section so as not to interfere with the driving part 231. In addition, the plurality of the sliders 242 may be configured to move along the rail 241 and may be smoothly slid by being in contact with the rail 241 through a ball or bearing. Thus, the movable member 25 may move more smoothly by the slider 242 moving along the rail 241.

The guide module 24 may be disposed at a position corresponding to each of the pair of movable members 25 and thus may guide the movement of each of the movable members 25. The guide module 24 may be constituted by a first guide module 24a and a second guide module 24b, which are provided at positions corresponding to the first movable member 25 and the second movable member 25. That is, the rail 241 may be provided in pair that are spaced apart from each other, and the pair of rails 241 may be disposed below the pair of movable members 25, respectively.

A coupling member 262 may be provided on the end of the movable member 25. The coupling member 262 may extend in a direction intersecting the extension direction of the movable member 25. In addition, a bottom surface of the coupling member 262 may be supported by the pair of rails 241. Here, the slider 242 may be further provided on a bottom surface of the coupling member 262.

In addition, an end of each of the pair of wires 261 may be fixed to the coupling member 262. The wires 261 may be spaced a predetermined interval from each other and may move together with the coupling member 262 when the movable member 25 moves. In addition, a pair of wire holes 222 through which the wire 261 enters may be defined inside the base accommodation part 220. Thus, the wire 261 may extend downward through the bottom surface of the upper body 20, that is, the body base 22.

A roller 263 may be rotatably mounted on the body base 22. The roller 263 may support the wire 261 directed from the coupling member 262 to the wire hole 222 in a bent state. The roller 263 may be disposed above the wire hole 222.

The roller 263 may be provided in a cylindrical shape and may be axially coupled a roller supports 265 mounted at both sides of the base accommodation part 220. In addition, a pair of wire grooves 2631 may be defined in an outer surface of the roller 263. The wire groove 2631 may be defined along the outer surface of the roller 263 so that the wire 261 is accommodated. In addition, the wire groove 2631 may be defined to have an interval corresponding to an interval of the wire hole 222 so that the wire 261 is bent while being maintained at a constant interval to move through the wire hole 222.

That is, as the movable member 25 moves, the wire 261 may be guided to move while being bent by the roller 263. In addition, the wire 261 may move vertically while being maintained at a set interval.

A roller cover 264 may be mounted on the end of the base accommodation part 220 on which the roller 263 is mounted. The roller cover 264 may shield a portion of the top surface of the base accommodation part 220, on which the roller 263 is mounted, and may shield the roller 263. Thus, the roller cover 264 may prevent the roller 263 and the wire 261 from being detached.

The coupling member 262 and the roller 263 may be disposed at both sides of the base accommodation part 220 and may be connected to the wire 261 at both the sides of the upper body 20 and guide the wire 261.

Hereinafter, the structure of the lighting device 30 will be described.

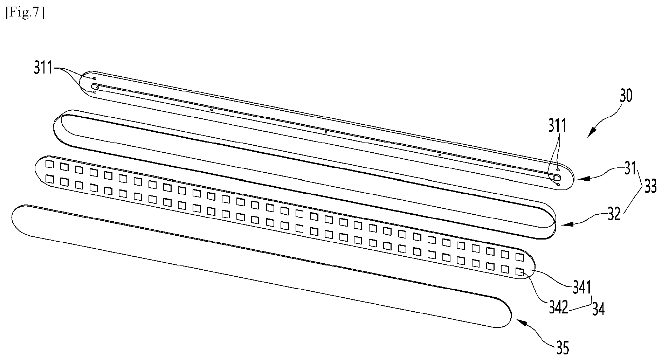

FIG. 7 is an exploded perspective view of the lighting device.

As illustrated in the drawing, the lighting device 30 may include a light source 34 that irradiates light, a light case 33 that accommodates the light source 34, and a light cover 35 that shields the light source 34.

The light source 34 may include, for example, a substrate 341 and an LED 342. The substrate 341 may have a size corresponding to the inside of the light case 33. In addition, a plurality of LEDs 342 may be disposed at regular intervals on the substrate 341. Here, at least a portion of the LEDs 342 may be RGB LEDs capable of emitting light having various colors. In addition, the LED 342 may be disposed on the bottom surface of the substrate 341 to irradiate light downward. That is, the LED 342 may irradiate light toward the top surface of the lower body 10.

The light case 33 may include a case plate 31 defining a top surface of the lighting device 30 and a case edge 32 defining a circumferential surface of the lighting device 30. The case plate 31 may be provided in a plate shape and may have a size and shape corresponding to those of the bottom surface of the upper body 20, that is, a bottom surface of the body base 22.

In addition, a wire connection part 311 to which the wire 261 is connected may be disposed at each of both sides of the case plate 31. The wire connection part 311 may pass through the case plate 31, and the wire 261 may be guided into the lighting device 30 through the wire connection part 311 to supply power to the light source.

The wire connection part 311 may be provided in pair at each of left and right sides of the case plate 31. In addition, the wire connection parts 311 at both the sides may be spaced the same interval from each other in the forward and backward direction. Thus, the top surface of the lighting device 30 may be stably hung by all four wires 261, and a height of the lighting device 30 may be determined according to a length of the wire 261 withdrawn from the upper body 20.

Top and bottom surfaces of the case edge 32 may be opened, and the case plate 31 may shield the opened top surface of the case edge 32, and the light cover 35 may shield the bottom surface of the case edge 32.

The case edge 32 may be inclined or rounded so as to face outward as it extends from an upper side to a lower side. Thus, the light cover 35 may have a size greater than that of the case plate 31 and may irradiate a sufficient amount of light toward the plant P.

The light cover 35 may be made of a material that transmits light and may shield the opened bottom surface of the light case 33. The light cover 35 may have a structure capable of diffusing light or a structure to which a diffusing agent is added. Thus, the lighting device 30 may shine in the form of a surface light and evenly irradiate light to the plant P. In addition, the lighting device 30 may also function as indirect lighting in indoors through the surface light.

Hereinafter, the operation of the plant cultivation apparatus 1 having the above-described structure will be described in more detail with reference to the drawings.

FIG. 8 is a view illustrating a state of the lift assembly when the lighting device is disposed at the highest height. In addition, FIG. 9 is a side view illustrating a state of the plant cultivation apparatus in the state of FIG. 8.

As illustrated in the drawings, when a tall plant P is grown in the plant cultivation apparatus 1 or a tall container 62 is disposed in the lower body 10, the lighting device 30 may be disposed as illustrated in FIG. 9.

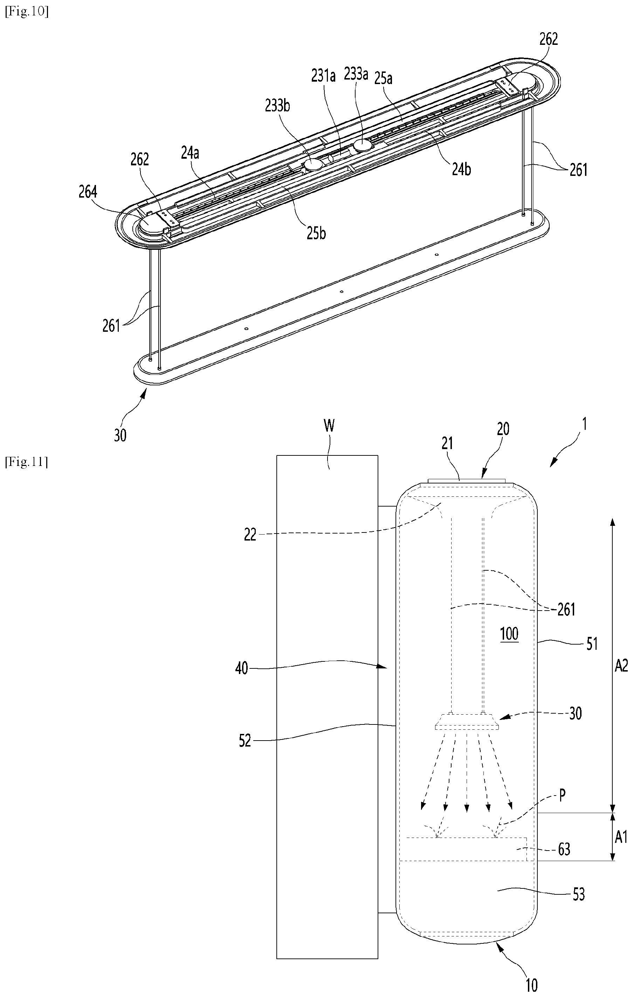

When the tall container 62 is used, or when the tall plant P is grown, the first region A1 may be set relatively higher than in the case of FIG. 11. In addition, as a vertical length of the first region A1 increases, a vertical length of the second region A2 decreases in inverse proportion. In addition, the lighting device 30 may be elevated within the second region A2 so as not to touch the plant P.

For example, when the lighting device 30 is disposed at the highest position, the top surface of the lighting device 30 may be in contact with the bottom surface of the upper body 20. In this state, the lighting device 30 and the upper body 20 may appear to be integrated with each other.

When examining the state of the lift assembly 200 with the lighting device 30 disposed at the highest position, the movable member 25 may move so that the coupling member 262 is disposed at the furthest position from the wire hole 222. The coupling member 262 may be disposed at the furthest position on the basis of the left and right ends of the upper body 20. In addition, the coupling member 262 may be disposed at the closest position on the basis of the pinion 233. In addition, a distance between the coupling members 262 at both the sides may be disposed as close as possible.

Here, the position of the coupling member 262 may become so that the wire 261 is completely inserted into the upper body 20. Thus, the wire 261 may not be exposed to the outside, and the lighting device 30 may be in contact with the bottom surface of the upper body 20. Thus, a sufficient space may be secured below the lighting device 30, and the tall plant P or the tall container 62 may be disposed therein.

In this state, the height of the lighting device 30 may be adjusted according to a growth level of the plant P within a range of the second region A2.

In addition, when the plant P having a low height is disposed on the lower body 10, or when the pad 64 or the pad tray 63 is mounted instead of the tall container 62, the height of the lighting device 30 may be lowered.

In detail, the user may drive the driving part 231 by manipulating the manipulation part 211. The pinion 233 may rotate forward by the forward rotation of the driving part 231, and the movable member 25 connected to the pinion 233 may move horizontally through the rotation of the pinion 233.

As the movable member 25 moves, the coupling member 262 may also move. Here, the coupling member 262 may move toward a side end of the upper body 20. In addition, the connection members 262 at both the sides may move away from each other.

The wire 261 may move downward through the wire hole 222 by the movement of the movable member 25 and the coupling member 262. The end of the wire 261 may be coupled to the lighting device 30, and thus, the wire 261 may be withdrawn outward from the upper body 20 in a taut state by a self-weight of the lighting device 30.

The movable members 25 disposed at both the sides move by the same distance, and withdrawal distances of the wire 261 also are the same. Thus, the lighting device 30 may descend without being inclined.

The operation of the manipulation part 211 may be performed until the lighting device 30 reaches a desired height. While the driving part 231 is driven by the operation of the manipulation part 211, the movable member 25 may continuously move toward the side end of the upper body 20, and the wire 261 may be withdrawn downward from the upper body 20.

When the lighting device 30 reaches the desired height, the user completes the operation of the manipulation part 211 to stop the operation of the driving part 231. When the driving part 231 is stopped, the movement of the movable member 25 may also be stopped, and the lighting device 30 may be maintained at the corresponding height.

FIG. 10 is a view illustrating a state of the lift assembly when the lighting device is disposed at the lowest height. In addition, FIG. 11 is a side view illustrating a state of the plant cultivation apparatus in the state of FIG. 10.

As illustrated in the drawings, when a plant P having a low height is grown in the plant cultivation apparatus 1 or the pad 64 or the pad tray 63 having a low height is disposed in the lower body 10, the lighting device 30 may be disposed as illustrated in FIG. 11.

In cases in which the pad 64 or the pad tray 63 having the low height is used, or in which the plant P is grown to a low height, the first region A1 may be set relatively lower than in the case of FIG. 9. In addition, as a vertical length of the first region A1 decreases, a vertical length of the second region A2 increases in inverse proportion. In addition, the lighting device 30 may be elevated within the second region A2 so as not to touch the plant P.

For example, the lighting device 30 may move up to the lowest height. The lowest height of the lighting device 30 may be set to a position higher than an upper end of the pad 64 or the pad tray 63, or an upper end of the plant P being grown.

When the lighting device 30 moves up to the lowest height by the manipulation of the manipulation part 211, the wire 261 may extend to a maximum length, and the lighting device 30 may be disposed at the lowest position between the upper body 20 and the lower body 10.

When examining the state of the lift assembly 200 with the lighting device 30 disposed at the lowest position, the movable member 25 may move so that the coupling member 262 is disposed closest to the wire hole 222. The coupling member 262 may be disposed at the closest position on the basis of the left and right ends of the upper body 20. In addition, the coupling member 262 may be disposed at the furthest position on the basis of the pinion 233. In addition, a distance between the connection members 262 at both the sides may be disposed as far as possible.

Thus, a length of the wire 261 exposed to the outside may be maximized, and the lighting device 30 may be in a state in which it is furthest from the upper body 20 and closest to the lower body 10. Thus, the lighting device 30 is brought closer to the top surface of the lower body and may more effectively irradiate light to the plant P having the low height or to the pad 64 or the pad tray 63 disposed therein.

In this state, the height of the lighting device 30 may be adjusted according to a growth level of the plant P within a range of the second region A2.

In addition, when the tall plant P is disposed on the lower body 10, or the tall container is mounted, the height of the lighting device 30 may increase.

In detail, the user may drive the driving part 231 by manipulating the manipulation part 211. The pinion 233 rotates in reverse due to the reverse rotation of the driving part 231, and the movable member 25 connected to the pinion 233 moves horizontally through the rotation of the pinion 233.

As the movable member 25 moves, the coupling member 262 may also move. Here, the coupling member 262 may move away from the side end of the upper body 20. In addition, the connection members 262 at both the sides may move in a direction closer to each other.

The wire 261 may be inserted into the upper body 20 through the wire hole 222 by the movement of the movable member 25 and the coupling member 262. Thus, the lighting device 30 may move upward. The operation of the manipulation part 211 may be performed until the lighting device 30 reaches a desired height. The lighting device 30 may move up to a height at which the lighting device 20 is in contact with the upper body 20 as disclosed in FIG. 9.

In addition to the foregoing embodiment, various embodiments may be exemplified. Another embodiment of the present invention is characterized in that the lift assembly directly move to operate by the user. Another embodiment of the present invention is the same as the foregoing embodiment in terms of the remaining configuration, except for some configurations of the lift assembly, and thus, the same configurations may be denoted by the same drawing reference numerals, and its detailed descriptions and illustrations will be omitted.

Hereinafter, another embodiment of the present invention will be described with reference to the drawings.

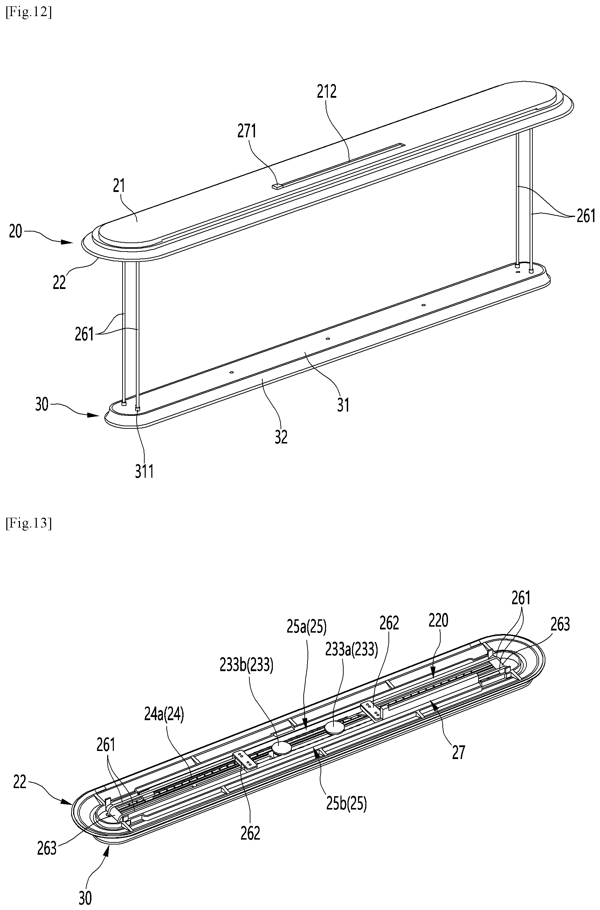

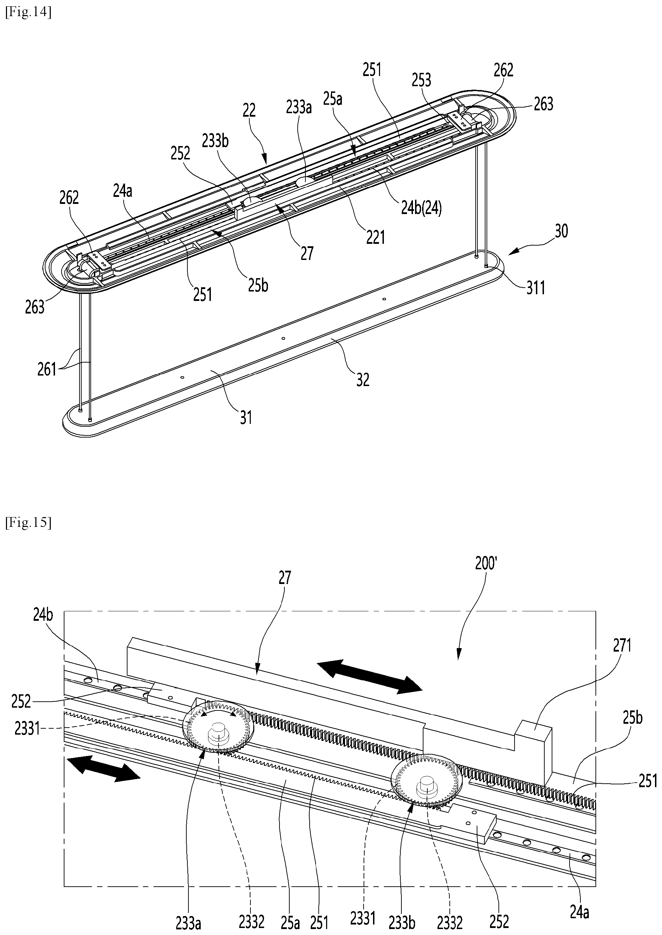

FIG. 12 is a perspective view of an upper body and a lighting device, which are components of a plant cultivation apparatus, according to another embodiment of the present invention. In addition, FIG. 13 is a view illustrating a state of a lift assembly when the lighting device is disposed at the highest height. In addition, FIG. 14 is a view illustrating a state of the lift assembly when the lighting device is disposed at the lowest height. In addition, FIG. 15 is a partial perspective view illustrating an operation state of the lift assembly. In addition, as illustrated in the drawings, a plant cultivation apparatus 1 according to another embodiment of the present invention may include a lower body 10, an upper body 20, and a lighting device 30.

The upper body 20 may include a body top 21 defining a top surface and a body base 22 in which a lift assembly 200' is accommodated.

In addition, a cutoff part 212 may be defined in a body top 21 to expose a manipulation member 27 for operating the lift assembly 200'. The manipulation member 27 may move along the cutoff part 212, and the lift assembly 200' may operate by the movement of the manipulation member 27. For example, the cutoff part 212 may extend in an extension direction of the upper body 20, that is, in a left and right direction. In addition, a portion of the manipulation member 27 may pass through the cutoff part 212 to protrude upward from the upper body 20.

A base rib 221 may be disposed on the body base 22, and a base accommodation part 220 in which the lift assembly 200' and the guide module 24 are mounted may be defined by the base rib 221. In addition, a coupling member 262 and a roller 263 may be provided at each of left and right sides of the base accommodation part 220 so that the wire 261 enters through both the left and right sides of the upper body 20.

The lift assembly 200' may include a pinion 233 rotatably mounted on the upper body 20, a movable member 25 that is gear-coupled to the pinion 233 to reciprocate, and a manipulation member 27 provided on the movable member 25. The pinion 233 may be provided in pair of a first pinion 233a and a second pinion 233b, and the movable member 25 may also be provided in pair of a first movable member 25a and a second movable member 25b. In addition, the guide module 24 may also be provided in pair of a first guide module 24a and a second guide module 24b.

The pinion 233 may be rotatably mounted on a rotation shaft 2332 of the body base 22. In addition, the pinion gear 2331 disposed along a circumference of the pinion 233 may be coupled to a rack gear 251 of the movable member 25. The pinion 233 may be provided in pair at a central portion of the body base 22 and may be spaced apart from each other.

The movable members 25 may be provided in pair facing each other with respect to the pinion 233. In addition, the movable member 25 may be gear-coupled to the pair of pinions 233. Thus, the pair of pinions 233 may rotate in the same direction, and the movable members 25 at the left and right sides may move in opposite directions according to the rotation of the pinions 233.

The movable member 25 may extend along the extension direction of the upper body 20. In addition, the rack gear 251 coupled to the pinion gear 2331 may be disposed along the movable member 25. In addition, a slider mounting part 252 on which a slider 242 is mounted may be disposed at one end of the movable member 25. In addition, the plurality of the sliders 242 may be disposed along the movable member 25 and mounted on a rail 241. Thus, the movable member 25 may stably move along the rail 241.

A coupling member mounting part 253 on which the coupling member 262 is mounted may be disposed on the lower end of the movable member 25. An end of the wire 261 may be connected to the coupling member mounting part 253. Thus, a length of the wire 261 exposed to the outside of the upper body 20 may be adjusted according to the movement of the movable member 25. In addition, a roller 263 may be provided on each of both sides of the body base 22 to guide the wire 261 being bent.

The manipulation member 27 may be disposed on the movable member 25 at a position corresponding to the cutoff part 212 among the pair of movable members 25. The manipulation member 27 may protrude upward from the movable member 25. In particular, the manipulation member 27 may include a handle 271 that protrudes to pass through the cutoff part 212.

Thus, the user may manipulate the handle 271 protruding through the cutoff part 212 to allow the movable member 25 to move. When the movable member 25 provided with the manipulation member 27 moves, the pinion 233 may rotate, and another movable member 25 gear-coupled to the pinion 233 may also move at the same time. The user may move the movable member 25 by manipulating the manipulation member 27 and may adjust a height of the lighting device 30 by adjusting a length of the wire 261.

In detail, as illustrated in FIG. 13, when the lighting device 30 is disposed at the highest position, the handle 271 of the manipulation member 27 may be disposed on one end (right end) of the cutoff part 212. In addition, the movable member 25 may be disposed at the furthest position from both the left and right sides of the upper body 20. Thus, in a state in which the wire 261 is inserted as far as possible into the upper body 20, the wire 261 may not be exposed to the outside. In addition, in this state, the lighting device 30 may be in contact with a bottom surface of the upper body 20.

In this state, when the handle 271 is held to move along the cutoff part 212, the movable member 25 may move, and the pair of movable members 25 may move together by the rotation of the pinion 233. The wire 261 may be withdrawn from the upper body 20 by the movement of the movable member 25, and the lighting device 30 may move downward to be lowered in height.

As illustrated in FIG. 14, when the lighting device 30 is disposed at the lowest position, the handle 271 of the manipulation member 27 may be disposed on the other end (left end) of the cutoff part 212. In addition, the movable member 25 may be disposed closest to each of both left and right ends of the upper body 20. Thus, the wire 261 may extend outward as much as possible from the upper body 20. In addition, in this state, the lighting device 30 may be furthest from the upper body 20 and closest to the lower body 10.

In addition to the foregoing embodiment, various embodiments may be exemplified. Another embodiment of the present invention is characterized in that the lift assembly includes a rotary plate, a movable member, and a link. Another embodiment of the present invention is the same as the foregoing embodiment in terms of the remaining configuration, except for some configurations of the lift assembly, and thus, the same configurations may be denoted by the same drawing reference numerals, and its detailed descriptions and illustrations will be omitted.

Hereinafter, further another embodiment of the present invention will be described with reference to the drawings.

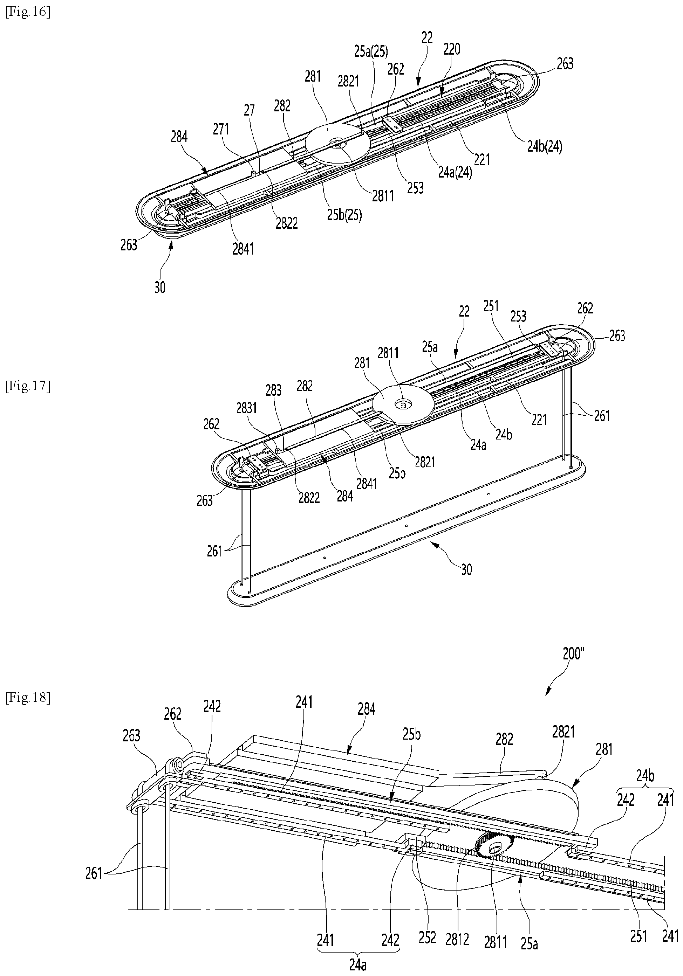

FIG. 16 is a view illustrating a state of a lift assembly in a state in which a lighting device of a plant cultivation apparatus is disposed at the highest height according to further another embodiment of the present invention. In addition, FIG. 17 is a view illustrating a state of the lift assembly when the lighting device is disposed at the lowest height. In addition, FIG. 18 is a partial perspective view illustrating an operation state of the lift assembly.

As illustrated in the drawings, a plant cultivation apparatus 1 according to another embodiment of the present invention may be provided with a lift assembly 200" on a body base 22 of an upper body 20. In addition, the lift assembly 200" is configured to be connected to a lighting device 30 and elevate the lighting device 30.

A base rib 221 may be disposed on the body base 22, and a base accommodation part 220 in which the lift assembly 200' and the guide module 24 are mounted may be defined by the base rib 221. In addition, a coupling member 262 and a roller 263 may be provided at each of left and right sides of the base accommodation part 220 so that the wire 261 enters through both the left and right sides of the upper body 20.

The lift assembly 200" may include a rotation plate 281 and a link 282. The rotation plate 281 may be rotatably mounted on the upper body 20. In addition, the link 282 may be connected to the rotation plate 281 and the manipulation member 27. In addition, the rotation plate 281 may be gear-coupled to the movable member 25 so that the rotation plate 281 rotates when the movable member 25 moves.

In detail, the rotation plate 281 may be rotatably mounted on a rotation shaft 2811 at a center of the body base 22. In addition, a pinion gear 2812 may be disposed on a bottom surface of the rotation plate 281 with the rotation shaft 2812 as the center. The pinion gear 2812 may be coupled to a rack gear 251 of the movable member 25.

The movable member 25 may be constituted by a first movable member 25a and a second movable member 25b. The first movable member 25a and the second movable member 25b may be disposed as a pair facing each other with respect to the rotation shaft 2812 of the rotation plate 281. In addition, both the pair of movable members 25 may be gear-coupled to the pinion gear 2812 of the rotation plate 281. Thus, the pair of movable members 25 may move in opposite directions according to the rotation of the rotation plate 281.

The movable member 25 may extend along the extension direction of the upper body 20. In addition, the rack gear 251 coupled to the pinion gear 2812 may be disposed along the movable member 25. In addition, a slider mounting part 252 on which a slider 242 is mounted may be disposed at one end of the movable member 25. In addition, the plurality of the sliders 242 may be disposed along the movable member 25 and mounted on a rail 241. Thus, the movable member 25 may stably move along the rail 241. The guide module 24 may be provided with a pair of first guide module 24a and second guide module 24b.

A coupling member mounting part 253 on which the coupling member 262 is mounted may be disposed on the lower end of the movable member 25. An end of the wire 261 may be connected to the coupling member mounting part 253. Thus, a length of the wire 261 exposed to the outside of the upper body 20 may be adjusted according to the movement of the movable member 25. In addition, a roller 263 may be provided on each of both sides of the body base 22 to guide the wire 261 being bent.

The manipulation member 27 may be disposed on the movable member 25 at a position corresponding to a cutoff part 212 defined in the body top 21 among the pair of movable members 25. The manipulation member 27 may protrude upward from the movable member 25. In particular, the manipulation member 27 may include a handle 271 that protrudes upward through the cutoff part 212.

In addition, the upper body 20 may be provided with an manipulation member guide 284 that guides the movement of the manipulation member 27. The manipulation member guide 284 may be provided in a plate shape and may be disposed above the movable member 25. In addition, the manipulation member guide 284 may extend in a movement direction of the movable member 25. Here, a length of the manipulation member guide 284 may have a size at which the manipulation member guide is disposed between an end of the coupling member 262 and the rotation plate 281.

A guide groove 2841 may be defined in the manipulation member guide 284. The guide groove 2841 may have a size at which the manipulation member 27 is accommodated. In addition, the guide groove 2841 may extend along the movement direction of the manipulation member 27. Thus, when the manipulation member 27 moves, the manipulation member 27 may reciprocate along the guide groove 2841. In addition, the handle 271 of the manipulation member 27 may protrude upward more than the guide groove 2841 and may protrude upward from the body top 21 through the cutoff part 212.

In addition, the manipulation member 27 and the rotation plate 281 may be connected by a link 282. The link 282 may be axially coupled to the manipulation member 27 at one end and axially coupled to the rotation plate 281 at the other end. The other end of the link 282 may be connected to the rotation plate 281, but may be axially coupled to one side close to the end of the rotation plate 281 and away from the rotation shaft 2812 of the rotation plate 281. Thus, when the manipulation member 27 moves horizontally, the rotation plate 281 may rotate by the link 282.

Thus, the user may move the manipulation member 27 by manipulating the handle 271 exposed through the cutoff part 212. The rotation plate 281 may rotate by the movement of the manipulation member 27, and the pair of movable members 25 coupled to the pinion gear 2812 of the rotation plate 281 may move at the same time. The user may move the movable member 25 by manipulating the manipulation member 27 and may adjust a height of the lighting device 30 by adjusting a length of the wire 261.

In detail, as illustrated in FIG. 16, when the lighting device 30 is disposed at the highest position, the handle 271 of the manipulation member 27 may be disposed inside the guide groove 2841. In addition, the movable member 25 may be disposed at the furthest position from a left end of the upper body. Thus, in a state in which the wire 261 is inserted as far as possible into the upper body 20, the wire 261 may not be exposed to the outside. In addition, in this state, a top surface of the lighting device 30 may be in contact with a bottom surface of the upper body 20.

In this state, when the handle 271 is held to move to a left side along the guide groove 2841, the movable member 25 may move together with the manipulation member 27, and simultaneously, the rotation plate 281 may rotate by the link 282. In addition, the pair of movable members 25 may move simultaneously in opposite directions by the rotation of the rotation plate 281. The wire 261 may be withdrawn from the upper body 20 by the movement of the movable member 25, and the lighting device 30 may move downward to be lowered in height.

As illustrated in FIG. 17, when the lighting device 30 is disposed at the lowest position, the handle of the manipulation member 27 may be disposed at the left side of the guide groove 2841. In addition, the movable member 25 may be disposed closest to a left end of the upper body 20. Thus, the wire 261 may extend outward as much as possible from the upper body 20. In addition, in this state, the lighting device 30 may be furthest from the upper body 20 and closest to the lower body 10.

### INDUSTRIAL APPLICABILITY

The plant cultivation apparatus according to the embodiments of the present invention will have high industrial applicability because the efficiency of plant cultivation is improved.

## Claims

1. A plant cultivation apparatus comprising:
a body having a cultivation space, in which plants are grown;
a lighting device provided in the cultivation space to illuminate the cultivation space; and
a lift assembly connected to the lighting device to move the lighting device,
wherein the cultivation space comprises a first region in which a plant is disposed and a second region above the first region, and
the lighting device is elevated within the second region by an operation of the lift assembly.

2. The plant cultivation apparatus according to claim 1, wherein the body comprises:
a lower body on which the plant is disposed; and
an upper body disposed to be spaced upward from the lower body and provided with the lift assembly,
wherein the cultivation space is defined between the lower body and the upper body.

3. The plant cultivation apparatus according to claim 2, further comprising a frame configured to connect the upper body to the lower body,
wherein a power cable configured to supply power to the plant cultivation apparatus is guided from the lower body to the upper body through the frame.

4. The plant cultivation apparatus according to claim 2, wherein the lift assembly comprises a wire connected to the lighting device provided below the upper body, and
a withdrawal length of the wire is adjusted according to an operation of the lift assembly to determine a height of the lighting device.

5. The plant cultivation apparatus according to claim 4, wherein the wire is provided in plurality, and
at least one or more wires are provided as electric wires through which power is supplied to the lighting device.

6. The plant cultivation apparatus according to claim 4, wherein the lift assembly comprises:
a driving part configured to provide rotation power;
a pinion rotating by the driving part; and
a movable member which extends in an extension direction of the upper body and on which a rack gear coupled to the pinion is disposed,
wherein the wire is connected to an end of the movable member and is adjusted in length, by which the wire is withdrawn from the upper body, according to reciprocating movement of the movable member.

7. The plant cultivation apparatus according to claim 6, wherein an input part configured to input a user's manipulation for the operation of the driving part is disposed on a top surface of the upper body.

8. The plant cultivation apparatus according to claim 6, wherein a guide module configured to guide the movement of the movable member is disposed on the upper body,
wherein the guide module comprises:
a rail extending the moving direction of the movable member; and
a slider coupled to the movable member and the rail and slid along the rail.

9. The plant cultivation apparatus according to claim 6, wherein the driving part, the pinion, and the movable member are disposed in pair at both left and right sides with respect to a center of the upper body, and
the wire is connected to each of the movable members disposed at both the sides.

10. The plant cultivation apparatus according to claim 6, wherein the driving part comprises a motor and rotates forwardly and reversely according to an user's operation input.

11. The plant cultivation apparatus according to claim 4, wherein the lift assembly comprises:
a pinion rotatably mounted on the upper body;
a movable member which extends in an extension direction of the upper body and on which a rack gear coupled to the pinion is disposed; and
a manipulation member protruding from one side of the movable member and exposed to the outside of the upper body to manipulate the movable member so that the movable member moves,
wherein the wire is connected to an end of the movable member and is adjusted in length, by which the wire is withdrawn from the upper body, according to reciprocating movement of the movable member.

12. The plant cultivation apparatus according to claim 4, wherein the lift assembly comprises:
a rotation plate rotatably mounted on the upper body and provided with a pinion gear at a central portion thereof;
a movable member extending in an extension direction of the upper body and provided with a rack gear coupled to the pinion gear to reciprocally move;
a manipulation member protruding from one side of the movable member and exposed to the outside of the upper body to manipulate the movable member so that the movable member moves; and
a link that is axially coupled to the manipulation member and the rotation plate and configured to rotate the rotation plate according to the manipulation of the manipulation member,
wherein the wire is connected to an end of the movable member and is adjusted in length, by which the wire is withdrawn from the upper body, according to the reciprocating movement of the movable member.

13. The plant cultivation apparatus according to claim 12, wherein a manipulation member guide extending in the moving direction of the movable member is disposed on the upper body,
wherein a guide groove recessed so that the manipulation member is inserted to guide the reciprocation movement of the manipulation member is defined in the manipulation member guide.

14. The plant cultivation apparatus according to claim 4, wherein the lighting device comprises:
a light source;
a light case configured to accommodate the light source and define an outer appearance of an upper portion of the lighting device; and
a cover which is configured to shield an opened bottom surface of the light case and through which light of the light source is transmitted,
wherein an end of the wire is connected to a top surface of the light case.

15. The plant cultivation apparatus according to claim 14, wherein the upper body comprises:
a body top configured to define a top surface of the upper body; and
a body base which is coupled to the body top to define a space in which the lift assembly is accommodated and through which the wire enters,
wherein the top surface of the light case has a size corresponding to that of a bottom surface of the body base, and
the light case and the body base are in contact with each other when the lighting device is disposed at the highest position.
